# EUROPEAN PATENT SPECIFICATION

(11) **EP 1 616 443 B1**
(45) Date of publication and mention of the grant of the patent: **15.06.2011**
(21) Application number: 04712261.9
(22) Date of filing: 18.02.2004
(51) Int. Cl.: H04W 76/06, H04W 88/18

(54) **COMMUNICATION METHOD FOR MOBILE SERVICES**
KOMMUNIKATIONSVERFAHREN FÜR MOBILE DIENSTE
PROCEDE DE COMMUNICATION POUR SERVICES MOBILES

(30) Priority: 15.04.2003 SE 0301151
(43) Date of publication of application: 18.01.2006
(73) Proprietor: SmartTrust AB, 100 74 Stockholm (SE)
(72) Inventor: SKEPPSTEDT, Mats, S-121 43 Arsta (SE)
(74) Representative: Söderman, Lisbeth Karin
(86) International application number: PCT/SE2004/000218
(87) International publication number: WO 2004/093477

(56) References cited:
- WO-A-95/33347
- KYLÄNPÄÄ M ET AL: "NOMADIC ACCESS TO INFORMATION SERVICES BY A GSM PHONE" COMPUTERS AND GRAPHICS, PERGAMON PRESS LTD. OXFORD, GB, vol. 20, no. 5, 1 September 1996 (1996-09-01), pages 651-658, XP004015416 ISSN: 0097-8493
- "Digital cellular telecommunications system (Phase 2+); Technical realization of the Short Message Service (SMS) Point-to-Point (PP) (GSM 03.40); GSM 03.40" ETSI STANDARDS, EUROPEAN TELECOMMUNICATIONS STANDARDS INSTITUTE, SOPHIA-ANTIPO, FR, vol. SMG4, no. 530, July 1996 (1996-07), XP014011603 ISSN: 0000-0001 cited in the application

## Description

### TECHNICAL FIELD

The invention is concerned with a communication method for mobile services, more in detail a method for handling a request message from a mobile station to a content provider.

### BACKGROUND ART

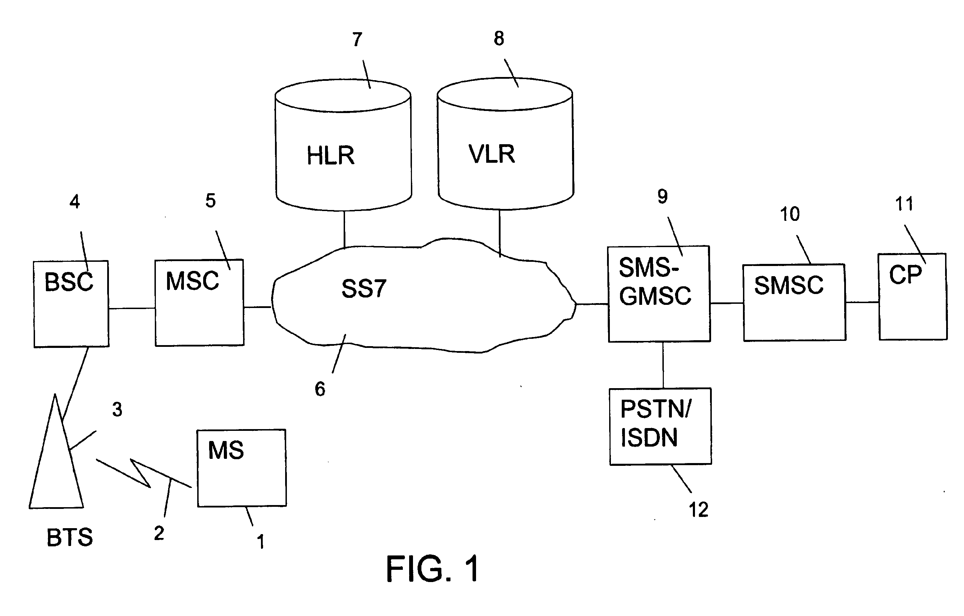

The Global System for Mobile Communication (GSM) is a standard for digital wireless communications. In the GSM system, the mobile handset is called Mobile Station (MS). A cell is formed by the coverage area of a Base Transceiver Station (BTS), which serves the MS in its coverage area. Several BTS stations together are controlled by one Base Station Controller (BSC). The BTS and BSC together form the Base Station Subsystem (BSS). The combined traffic of the mobile stations in their respective cells is routed through a switch called Mobile Switching Center (MSC). PSTN (Public Switched Telephone Network) is the world's collection of interconnected voice-oriented public telephone networks. Connection originating or terminating from the external fixed telephone network (PSTN) are handled by a dedicated gateway Gateway Mobile Switching Center (GMSC). The architecture of a GSM system is shown in figure 1.

GSM has much more services than just voice telephony. Today's second-generation GSM networks deliver high quality and secure mobile voice and data services (such as SMS/Text Messaging) with full roaming capabilities across the world.

The development of GSM Networks and terminals to support more advanced data bearer technologies has allowed for the introduction of new exciting data services and mobile applications.

In mobile networks people can be contacted by calling to their mobile telephone number or by sending to that number a so called short message by e.g. making use of the Short Message Service (SMS). Short Message Service (SMS) is the transmission of short text messages, to and from a mobile phone, fax machine and/or IP address. SMS messages must be no longer than 160 alphanumeric characters and contain no images or graphics. The point-to-point Short message service (SMS) provides a means of sending messages of limited size to and from GSM mobiles. Detailed information can be found in the ETSI standard GSM 03.40 Version 5.3.0.

The basic network structure of the SMS service comprises two entities, which may receive or send messages being the endpoints between which the SMS message is sent. The entity can be located in a fixed network, a mobile station or an internet protocol network.

A further component in the SMS network is the Mobile Switching Center (MSC), which performs the switching functions of the system and control calls to and from other telephone and data systems. Its most important functions are registration, updating of registration of whereabouts, hand-overs and roaming. MSC is thus an interface between the radio system and various external networks, such as the public switched telephone network and packet switched Networks. The MSC performs all signaling functions that are necessary to establish calls to and from mobile stations. Communication between the different function authorities is based on signaling system # 7(SS7). An MSC that also handles the Gateway function into other networks is called Gateway-MSC (GMSC).

Messages sent to and from mobile stations are received by a Short Message Service Center (SMSC), which must then direct it to the appropriate mobile device if the message is to be sent to a mobile station or it must generally direct it to a recipient. Before attempting delivery of a short message to a mobile device, the SMSC must receive routing information to determine the serving Mobile Switching Center (MSC) for a given mobile station at the time of the delivery attempt. In order to receive the routing information, the SMSC sends a SMS request to the home location register (HLR) to find the customer. Once the HLR receives the request, it will respond to the SMSC with the subscriber's status (either inactive or active) and the location for where the subscriber is roaming. The SMSC then transfers the message to the serving MSC, which deliver the message to the receiving subscriber. Recipients can then initiate a response message using the same process.

The SMS gateway MSC (SMS-GMSC) is an MSC capable of receiving a short message from an SMSC, interrogating a home location register (HLR) for routing information, and delivering the short message to the "visited" MSC of the recipient mobile station.

The Home Location Register (HLR) is a database used for permanent storage and management of subscriptions and service profiles. Upon interrogation by the SMSC, the HLR provides the routing information for the indicated subscriber.

The Visitor Location Register (VLR) is a database that contains temporary information about subscribers and local subscriber capabilities. This information is needed by the MSC in order to serve visiting subscribers.

A Mobile Station (MS) is a wireless terminal capable of receiving and originating short messages as well as voice calls being an endpoint to or from which the SMS message is sent.

The backbone of the wireless network signaling infrastructure is based on Signaling System No 7 (SS7). SS7 is a global standard for telecommunications defined by the International Telecommunication Union (ITU) Telecommunication Standardization Sector (ITU-T). The standard defines the procedures and protocol by which network elements in the public switched telephone network (PSTN) exchange information over a digital signaling network to effect wireless (cellular) and wireline call setup, routing and control. The ITU definition of SS7 allows for national variants such as the American National Standards Institute (ANSI) and Bell Communications Research (Telcordia Technologies) standards used in North America and the European Telecommunications Standards Institute (ETSI) standard used in Europe. The SS7 network and protocol are used for e.g basic call setup, management, wireless services, wireless roaming, and mobile subscriber authentication, enhanced call features thus providing efficient and secure worldwide telecommunications. SMS comprises two basic point-to-point services, i.e. the Mobile-Originated Short Message (MO-SM) and the Mobile-Terminated Short Message (MT-SM)

Mobile-originated (MO) short messages are transported from the MO-capable handset to the SMSC and can be destined to other mobile subscribers or for subscribers on fixed networks or Internet protocol (IP) networks (including the Internet and private e-mail networks). Mobile-terminated (MT) short messages are transported from the SMSC to the handset and can be submitted to the SMSC by other mobile subscribers via MO-SM or by other sources such as voice-mail systems or operators.

For MT-SM, a report is always returned to the SMSC either confirming the short message delivery to the handset or informing the SMSC of the short message delivery failure and identifying the reason for failure (cause code). Similarly, for MO-SM, a report is always returned to the handset either confirming the short message delivery to the SMSC or informing of delivery failure and identifying the reason.

Many service applications can be implemented by combining these service elements. Aside from the obvious notification services, SMS can be used in one-way or interactive services providing wireless access to any type of information anywhere. By leveraging new emerging technologies that combine browsers, servers, and new markup languages designed for mobile terminals, SMS can enable wireless devices to securely access and send information from the Internet or intranets quickly and cost-efficiently. One of these technologies where SMS can provide a cooperative, rather than a competitive, approach is the Wireless Application Protocol (WAP), which allows transport of data for mobile wireless users and works as an interface between internet and GSM.

Some of the potential applications of SMS technology, utilizing both MT-SM and MO-SM where appropriate, include Notification Services such as voice/fax message notification, e-mail notification, and reminder/calendar services, e-mail interworking, paging interworking, information services, such as weather reports, traffic information, entertainment information (e.g., cinema, theater, concerts), financial information (e.g., stock quotes, exchange rates, banking, brokerage services), and directory assistance and WAP integration.

SMS can support both (MT) and (MO) approaches to allow not only delivery under specific conditions but also delivery on demand, as a response to a request.

The ETSI standard 3GPP TS 29.002 V3.10.0 Mobile Application Part (MAP) specification specifies the scenarios for mobile-terminated as well as mobile-originated short messages.

KYLÄNPÄÄ M ET AL describes in "NOMADIC ACCESS TO INFORMATION SERVICES BY A GSM PHONE access methods generally to information services from a GSM phone. The article can be found in COMPUTERS AND GRAPHICS, PERGAMON PRESS LTD. OXFORD, GB, vol.20, no. 5, 1 September 1996, pages 651-658, ISSN:0097-8493.

WO publication 95/33347 provides a telecommunication system for interconnecting mobile terminals for establishing a link with an individual terminal so that transaction can be established and means for releasing the communication link upon termination of a transaction from the terminal. Means can be set to indicate whether a further transaction is to be made involving the terminal and means responsive for preventing release of the link.

The GSM network was, however, never designed to handle interactive usage of SMS. Interactive SMS usage of the GSM network is most often slow because of the lack of support for these types of applications, such as many mobile service applications, wherein interactive signaling is used.

A common scenario in a mobile service application is the sending of a short message by a mobile station, such as a service request, and the sending of a reply for the request. The sending of such a reply will most often force the radio system part of the network to do a new paging in order to find the location of the mobile station requesting the reply. Such a scenario causes performance degradation for the users. In some cases the time until a response is received is unacceptably long.

### THE OBJECT OF THE INVENTION

The object of the invention is a new and more sophisticated way of handling the reply messages in which the prior art problems with time and additional paging are avoided.

### SUMMARY OF THE INVENTION

The method of the invention for handling a request message from a mobile station to a content provider is performed in a network comprising at least said mobile station, said content provider, a gateway, and a radio system. The radio system has a radio link to the mobile station and another link to the gateway. In the method, the mobile station sends a request message through a radio channel on said radio link, which request message is received by said radio system. The radio system forwards the request message to the gateway, and the gateway sends the request message further to the content provider. After successful sending of the request message to the content provider, the gateway sends a response to the mobile station of successful sending of said request message. The response to the mobile station is sent via said radio system and further through said radio channel, which is kept open for the response for a given time. When the content provider has received the request, it sends a reply message to the mobile station to said request. The method is characterized in that both said response of successful sending and said reply from the content provider are received by the mobile station through the same radio channel.

The preferable embodiments of the invention have the characteristics of the subclaims.

The gateway preferably delays the delivery to the mobile station of the successful sending of the short message in order to keep the radio channel between the mobile station and the radio system open for a given time, i.e. until receiving the reply message from the content provider. The gateway then sends the response message of successful sending and the reply message to the mobile station immediately followed by each other on the said same radio channel.

The invention is advantageously implemented in a GSM network by making use of the SMS service scenario. In this scenario Mobile-originated (MO) short messages are transported from the MO-capable handset to the SMSC and can be destined to other mobile subscribers or for subscribers on fixed networks or Internet protocol (IP) networks (including the Internet and private e-mail networks). For MO-SM, a report is always returned to the handset either confirming the short message delivery to the SMSC or informing of delivery failure and identifying the reason. When the invention is implemented in this scenario, the SMSC handles the gateway functions of the invention and the content provider is e.g. an entity in an internet protocol network (IP).

A response message of a successful sending of the short message after successful sending or an abort signal of an unsuccessful sending is sent to the mobile station. The response message is e.g. an acknowledgement to a short message sent by making use of the Short Message Service (SMS) in a GSM network. An abort signal of an unsuccessful sending is sent to the mobile station when the time of keeping the radio channel open is exceeded.

Usually, in prior art solutions, such an acknowledgement is sent as soon as the short message reaches the GMSC part of SMSC. If this response message is delayed too long for some reason, the delay will cause an abort signal and the mobile terminal will interpret the abort signal as a failed message.

In the invention, the radio channel between the mobile station and the radio system (such as the Base Station Subsystem (BSS) when implemented in GSM) is kept open by delaying the delivery to the mobile station of a successful sending of the short message. After having received the reply message from the content provider, the gateway sends the response message of successful sending of the short message to the mobile station immediately followed by said reply message on the same channel, usually within less than 0,2 seconds.

This delay has to be below the threshold of causing an abort signal to the mobile station of an unsuccessful sending of the short message. Thus, the delay to keep said radio channel is ca 1 - 2 seconds. The delay is e.g. controlled by means of a timer. Preferably, the response message is, however, sent anyway before the end of the delay if no reply has arrived from the content provider.

Thus, in the invention, the prior art problems with extra paging for the radio system to find the location of the mobile station are solved by delaying the response to the message sent by the mobile station and by keeping the radio channel between the radio system and the mobile station open to be later used in the sending of the reply form the content provider. If the channel would not be kept open, a new paging would be necessary to find the location of the mobile station when sending the response from the content provider.

In the invention, the performance for interactive applications between mobile stations and content providers are maximized by delaying the response of successful sending before sending it to the mobile station long enough, not more than ca 2 seconds, to keep the radio channel open for the reply, but below the abort threshold.

Besides good performance, there will be less paging requests in the network. The drawback is that the mobile device will be blocked for the time for the delay but a calculation show that the extra load will only be in the order of ca 2%. The cell the mobile is located in will be blocked for new paging this little extra time the response is delayed.

In the following the invention will be described by means of some advantageous embodiments with reference to figures implemented to the SMS service in a GSM network. The intention is not to restrict the invention to the details of these embodiments, which are presented for illustrative purposes only and the idea of the invention could equally be implemented to other networks than the GSM. The invention is characterized by the scope of the appended claims.

### FIGURES

Figure 1 presents the basic network structure of a GSM system and the SMS service system, in which the method of the invention can be implemented.
Figure 2 presents the mobile originated short message transfer procedure of prior art.
Figure 3 presents the method of invention for handling a request message from a mobile station to a content provider.

### DETAILED DESCRIPTION

Figure 1 is an architectural view of the existing basic network structure of the SMS service in the GSM network, in which the method of the invention can be implemented for handling a request message in form of a short message from a mobile station to a content provider outside the GSM network.
The GSM network can be divided into three major parts.

The first part, the Mobile Station (MS) with reference number 1 is carried by the subscriber.

The second one, the Base Station Subsystem (BSS) controls the radio link with the Mobile Station. A cell is formed by the coverage area of a Base Transceiver Station (BTS) having reference number 3 in figure 1, which serves the MS 1 in its coverage area. Several BTS stations together are controlled by one Base Station Controller (BSC) having reference number 4 in the figure. The BTS 3 and BSC 4 together form the Base Station Subsystem (BSS).

The third one, The Network Subsystem, the main part of which is the Mobile services Switching Center (MSC) with reference number 5 in the figure, performs the switching of calls between the mobile and other fixed or mobile network users, as well as management of mobile services, such as authentication. Not shown is the Operations and Maintenance center, which oversees the proper operation and setup of the network. The Mobile Station and the Base Station Subsystem communicate across the air interface or radio link by means of a radio channel having reference number 2 in figure 1. The Base Station Subsystem communicates with the MSC 4 across a cable interface.

In the SMS service provided by the GSM system, a short message can be sent from the mobile station (MS) 1. The mobile switching center (MSC) 5 performs the signaling functions that are necessary to send the message further. The communication from MSC 5 further is based on signaling system no. 7 (SS7) protocol, which is indicated with reference number 6 in the figure.

The Visitor Location Register (VLR) with reference number 8 is a database that contains temporary information about subscribers. This information is needed to serve visiting subscribers. It is used by the MSC 5 when a short message is sent to another mobile station and MSC 5 also interrogates the VLR 8 to verify that the message transfer does not violate the supplementary services invoked or restrictions imposed.

The signal containing the SMS message sent originally from the MS 1 is forwarded from MSC 5 by means of the signaling protocol SS7 to the Gateway-MSC (GMSC) with reference number 9 that handles all messages to destinations in other networks being an interface between MSC 5 and other networks, such as the Public Switched Telephone Network (PSTN) or (ISDN) both referred to with reference number 12 in figure 1. ISDN, stands for Integrated Services Digital Network, and is a system of digital phone connections which has been available for over a decade. This system allows data to be transmitted simultaneously across the world using end-to-end digital connectivity.

The Gateway-MSC (GMSC) 9 forwards the short message to the Short Message Service Center (SMSC) with reference number 10, the function of which is to relay, store and forward short messages between the sender and the recipient. The SMSC 10 delivers the message, which here is a service request, to a content provider (CP) indicated with reference number 11 in figure 1. The CP 11 might be situated in e.g. an IP network.

In some situations a response to an SMS request is required by the MS 1 that sent the request.

The response to the MS 1 from the CP 11 is received by SMSC 10, which must then direct it to the appropriate mobile device. Before attempting delivery of the short message, the SMSC must receive routing information to determine the right serving Mobile Switching Center (MSC) 5 for the mobile device 1 at the time of the delivery attempt.

The Home Location Register (HLR) with reference number 7 is a database used for permanent storage and management of subscriptions and service profiles. Upon interrogation by the SMSC 10, the HLR 7 provides the routing information for the indicated subscriber.

In order to receive the routing information, the SMSC 9 sends a SMS request to the HLR 7 to find the roaming customer. Once the HLR 7 receives the request, it will respond to the SMSC 10 with the subscriber's status (either inactive or active) and the location for where the subscriber is roaming. The SMSC 10 then, after having received the location information for the MS 1, transfers the message to the serving MSC 5, which deliver the message to the receiving subscriber, i.e. the MS 1.

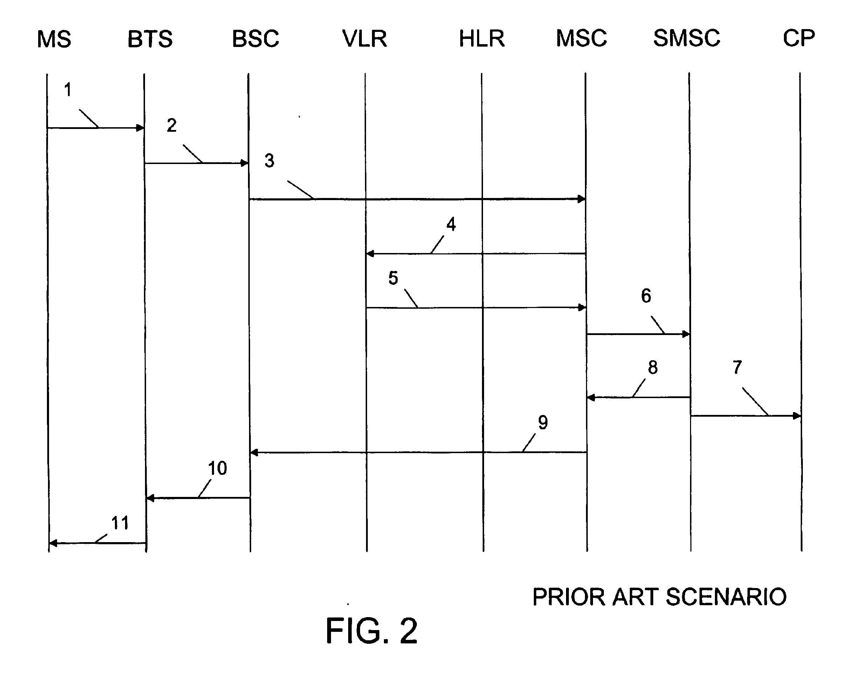

Figure 2 presents the Mobile-Originated Short Message (MO-SM) service of prior art, which is one of the point-to-point SMS services according to the ETSI standard 3GPP TS 29.002 V3.10.0 Mobile Application Part (MAP) specification.

In figure 2, the mobile station (MS) sends a short message directed to a content provider CP in another network, such as an IP network. The message is first sent to the Base Transceiver Station (BTS) in step 1 through a radio channel between the mobile station MS and BTS. BTS then transfers the message to the Base Station Controller (BSC) in step 2, which forwards it to the mobile switching center (MSC) in step 3 of figure 2. The MSC interrogates the VLR to verify that the message transfer does not violate the supplementary services invoked or the restrictions imposed in steps 4 and 5. The VLR, which keeps control of visiting subscribers would know if e.g. a given mobile station would not be allowed to receive short messages.

In step 6, the MSC sends the message further to the SMSC. In step 7, the SMSC then delivers the short message to the content provider (CP). The message is sent, even if not shown in the figure, by means of the signaling protocol SS7 via a Gateway-MSC (GMSC) that handles all messages to destinations in other networks being an interface between MSC and other networks. The GMSC provides interworking with the network to access the Short Message Service Center (SMSC), the mobile network and routing of Send Routing Info for SM. All Short Messages go through the GMSC.

According to the standard method of figure 2, the SMSC acknowledges to the MSC the successful outcome of the short message operation in step 8 as quickly as possible and the MSC forwards to MS the successful outcome of the mobile-originated Short Message operation in step 9 to the BSC, which forwards it to the BTS in step 10. BTS then forwards the successful outcome message to the mobile station MS in step 11 through the radio channel between MS and BTS through which the message in step 1 was sent. As signal 8 is sent as quickly as possible, it is usually sent a little before signal 7, approximately at the same time, though. If the MS had required a reply from the content provider CP to the short message, the reply from CP arrives after step 11 and is sent to the MS separately.

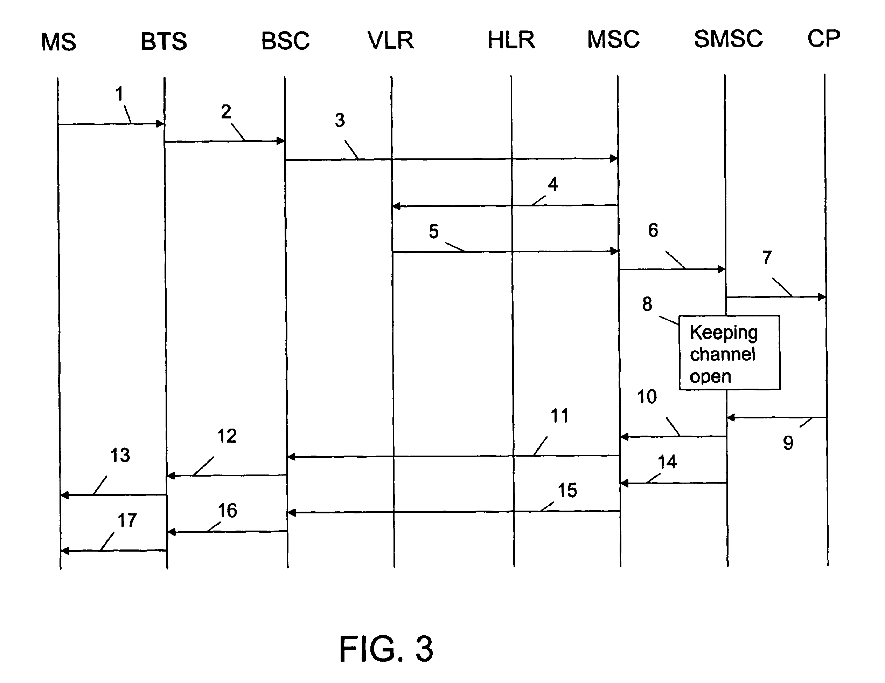

Figure 3 presents the method of the invention for handling request messages implemented in the SMS service scenario of the GSM network, so the request message is sent as a short message. Steps 1-6 are in this implementation equal to those in figure 2, i.e. the mobile station (MS) sends a short message, which in this example is a service request to a content provider in another network, e.g. an IP network, such as internet, via the radio channel between the MS and the BTS to the BSC, from which it is forwarded to the mobile switching center (MSC) in steps 1-3. In steps 4 and 5, the MSC interrogates the VLR to verify that the message transfer does not violate the supplementary services invoked or the restrictions imposed. In step 6, the MSC sends the message further to the SMSC that works as the gateway via which the request message is sent from the mobile station MS to the content provider CP, which can be in another network. In step 7, the SMSC then delivers the short message to the content provider (CP).

Instead of immediately sending a reply message of successful outcome of the message as was performed in the standard method described in figure 2, the SMSC delays the response in order to keep the radio channel between the MS and the BSC open in step 8, until a response to the request arrives from the content provider in step 9. After having received signal 9, the SMSC forwards the corresponding reply message of successful outcome of the message in step 10 to the MSC as was performed in the standard method described in step 8 of figure 2. In figure 3, the successful outcome of the message is forwarded to the MS in steps 11 - 13 via the BSC and BTS. Immediately thereafter, usually within less than 0,2 seconds, the SMSC forwards the response from the content provider to the MS in step 14 via the MSC and in steps 15 - 17 via the BSC and BTS as signals 11 -13. Signals 10 and 14 are transferred to the MSC short enough after eachother so that signals 13 and 17 are transmitted through the same radio channel to the MS, the same one through which the signal of step one was sent.

## Claims

1. Method for handling a request message from a mobile station (1) to a content provider (11), in a network comprising at least said mobile station (1), said content provider (11), a gateway (10), and a radio system having a radio link (2) to the mobile station (1) and another link to the gateway, in which method
a) the mobile station (1) sending said request message through a radio channel on said radio link (2),
b) the request message being received by said radio system,
c) the radio system forwarding the request message to said gateway (10),
d) the gateway (10) sending the request message to the content provider (11),
e) the gateway (10) delaying the delivery to the mobile station (1) of the successful sending of the request message in order to keep the radio channel between the mobile station and the radio system open until receiving a reply message from the content provider (11),
f) the content provider (11) sending a reply message to the mobile station (1) to said request,
**characterized by**
g) the gateway (10) sending to the mobile station (1), via said radio system, a response of successful sending of said request message, and the reply message of step f) to the mobile station (1) immediately followed by each other on the same radio channel, through said radio channel, which was kept open for the response for a given time, whereby the messages of steps e) and f) are received by the mobile station (1) through the same radio channel.

2. Method of claim 1, **characterized in that** said request message from the mobile station (1) is a Short Message in a GSM network, whereby a response message of a successful sending of the short message is sent after successful sending within said time of step e) or an abort signal of an unsuccessful sending is sent to the mobile station (1) when the time of step e) is exceeded.

3. Method of claim 1 or 2, **characterized in that** the delay is below the threshold of causing an abort signal to the mobile station (1) of an unsuccessful sending of the short message.

4. Method of claim 3, **characterized in that** the delay in order to keep said radio channel is ca 1 - 2 seconds, which delay is controlled by means of a timer.

5. Method of any of claims 1 - 4, **characterized in that** the response message of step f) is sent anyway before the end of the delay if no reply has arrived from the content provider (11).

## Patentansprüche

1. Verfahren zur Behandlung einer Anforderungsnachricht von einer Mobilstation (1) zu einem Inhaltsanbieter (11) in einem Netzwerk, das zumindest die Mobilstation (1), den Inhaltsanbieter (11), ein Gateway (10) und ein Funksystem umfasst, das eine Funkverbindung (2) zur Mobilstation (1) und eine andere Verbindung zum Gateway aufweist, bei welchem Verfahren
a) die Mobilstation (1) die Anforderungsnachricht auf einem Funkkanal über die Funkverbindung (2) versendet,
b) die Anforderungsnachricht vom Funksystem empfangen wird,
c) das Funksystem die Anforderungsnachricht zum Gateway (10) weiterleitet,
d) das Gateway die Anforderungsnachricht an den Inhaltsanbieter (11) versendet,
e) das Gateway die Übermittlung der erfolgreichen Versendung der Anforderungsnachricht an die Mobilstation (1) hinauszögert, um den Funkkanal zwischen der Mobilstation und dem Funksystem offenzuhalten, bis eine Antwortnachricht vom Inhaltsanbieter (11) empfangen wird,
f) der Inhaltsanbieter (11) an die Mobilstation (1) eine Antwortnachricht für die Anforderung versendet,
**dadurch gekennzeichnet, dass**
g) das Gateway an die Mobilstation (1) über das Funksystem eine Antwort auf erfolgreiche Versendung der Anforderungsnachricht und die Anwortnachricht von Schritt f) an die Mobilstation (1) über den Funkkanal übermittelt, die auf dem gleichen Funkkanal unmittelbar aufeinander folgen, über den Funkkanal, der für die Antwort eine vorgegebene Zeit offengehalten wurde, wobei die Nachrichten der Schritte e) und f) von der Mobilstation (1) auf dem gleichen Funkkanal empfangen werden.

2. Verfahren nach Patentanspruch 1, **dadurch gekennzeichnet, dass** es sich bei der Anforderungsnachricht von der Mobilstation (1) um eine Short Message in einem GSM-Netzwerk handelt, wobei eine Antwortnachricht einer erfolgreichen Versendung der Short Message nach erfolgreicher Versendung verschickt wird innerhalb der Zeit von Schritt e) oder ein Abbruchssignal einer erfolglosen Versendung zur Mobilstation (1) verschickt wird, wenn die Zeit von Schritt e) überschritten wird.

3. Verfahren nach Patentanspruch 1 oder 2, **dadurch gekennzeichnet, dass** die Verzögerung unterhalb der Schwelle ist, die ein Abbruchssignal einer erfolglosen Versendung der Short Message der Mobilstation (1) verursacht.

4. Verfahren nach Patentanspruch 3, **dadurch gekennzeichnet, dass** die Verzögerung, um den Funkkanal zu halten, ca. 1 bis 2 Sekunden ist, welche Verzögerung mit einem Timer kontrollier wird.

5. Verfahren nach einem der Patentansprüche 1 bis 4, **dadurch gekennzeichnet, dass** die Anwortnachricht von Schritt f) vor dem Ende der Verzögerung weggeschickt wird, falls vom Inhaltsanbieter (11) keine Antwort gekommen ist.

## Revendications

1. Procédé pour traiter un message de requête à partir d'une station mobile (1) vers un fournisseur d'information (11), dans un réseau comprenant au moins ladite station mobile (1), ledit fournisseur d'information (11), une passerelle (10), et un système radio ayant une liaison radio (2) vers la station mobile (1) et une autre liaison vers la passerelle, dans lequel procédé
a) la station mobile (1) envoyant ledit message de requête via un canal radio sur ladite liaison radio (2),
b) le message de requête étant reçu par ledit système radio,
c) le système radio renvoyant le message de requête à ladite passerelle (10),
d) la passerelle (10) envoyant le message de requête au fournisseur d'information (11),
e) la passerelle (10) retardant la transmission à la station mobile (1) de l'envoi réussi du message de requête afin de maintenir ouvert le canal radio entre la station mobile et le système radio jusqu'à la réception d'un message de réponse depuis le fournisseur d'information (11),
f) le fournisseur d'information (11) envoyant à la station mobile (1) un message de réponse à ladite requête,
**caractérisé en ce que**
g) la passerelle (10) envoyant à la station mobile (1), via le système radio, une réponse à l'envoi réussi dudit message de requête, et le message de réponse de la phase f) à la station mobile (1) immédiatement l'un après l'autre sur le même canal radio, à travers ledit canal radio, qui a été maintenu ouvert pour la réponse pendant un certain temps, et les messages des phases e) et f) sont reçus par la station mobile (1) à travers le même canal radio.

2. Procédé selon la revendication 1, **caractérisé en ce que** ledit message de requête depuis la station mobile (1) est un message court (SM) dans un réseau GSM, dans lequel un message de réponse d'un envoi réussi du message court est envoyé après l'envoi réussi dans ledit temps de la phase e) ou un signal d'abandon d'un envoi échoué est envoyé à la station mobile (1), lorsque le temps de la phase e) a été dépassé.

3. Procédé selon la revendication 1 ou 2, **caractérisé en ce que** le délai est en dessous du seuil causant un signal d'abandon à la station (1) d'un envoi échoué du message court.

4. Procédé selon la revendication 3, **caractérisé en ce que** le délai pour maintenir ledit canal radio est environ 1 à 2 secondes, lequel délai est contrôlé au moyen d'un temporisateur.

5. Procédé selon l'une quelconque des revendications 1 à 4, **caractérisé en ce que** le message de réponse de la phase f) est envoyé de toute manière avant la fin du délai, si aucune réponse n'est arrivée du fournisseur d'information (11).
